# EUROPEAN PATENT APPLICATION

(11) **EP 3 923 159 A1**
(43) Date of publication of application: **15.12.2021**
(21) Application number: 20212920.1
(22) Date of filing: 09.12.2020
(51) Int. Cl.: G06F 16/33, G06F 16/35

(54) **METHOD, APPARATUS, DEVICE AND STORAGE MEDIUM FOR MATCHING SEMANTICS**

(30) Priority: 12.06.2020 CN 202010532484
(71) Applicant: BEIJING BAIDU NETCOM SCIENCE AND TECHNOLOGY CO. LTD., 100085 Beijing (CN)
(72) Inventor: SHI, Hongjian, BEIJING, 100085 (CN); JIANG, Wenbin, BEIJING, 100085 (CN); FENG, Xinwei, BEIJING, 100085 (CN); YU, Miao, BEIJING, 100085 (CN); ZHOU, Huanyu, BEIJING, 100085 (CN); TIAN, Meng, BEIJING, 100085 (CN); WU, Xueqian, BEIJING, 100085 (CN); SONG, Xunchao, BEIJING, 100085 (CN)
(74) Representative: Santarelli

(57) **Abstract**

The present disclosure discloses a method, apparatus, device, and storage medium for matching semantics, relates to the technical fields of knowledge graph, natural language processing, and deep learning. A specific implementation includes: acquiring a first text and a second text; acquiring language knowledge related to the first text and the second text; determining a target embedding vector based on the first text, the second text, and the language knowledge; and determining a semantic matching result of the first text and the second text, based on the target embedding vector. This implementation may use external language knowledge to increase the amount of information in the text semantic matching process, so that the semantics of the text can be accurately described, and the accuracy of semantic matching can be improved.

## Description

### TECHNICAL FIELD

Embodiments of the present disclosure relate to the field of computer technology, specifically to the technical fields of knowledge graph, natural language processing, and deep learning, and more specifically to a method, apparatus, device, and storage medium for matching semantics.

### BACKGROUND

Semantic matching technology is an important technical direction in the field of natural language processing, and also has a wide range of applications in service, serving as the cornerstone of applications. Semantic matching technology, in short, is a technology that performs similarity matching on two character strings based on semantics of the two character strings after semantic understanding of the two character strings. Semantic matching technology not only has always occupied a very important position in the field of natural language processing, but also has a wide range of applications in a plurality of service fields such as sorting, recommendation, and Q&A, and is an indispensable part of research and service.

Semantic matching technology is generally implemented using a semantic matching model. The goal of constructing the semantic matching model, in short, is to describe the semantic similarity between two texts, and to determine whether two character strings match based on the semantic similarity. The key step of the semantic matching model lies in the semantic description of text. However, the process often faces the problem of inaccurate semantic matching due to inaccurate description of the semantics contained in the text relying solely on information contained in the text.

### SUMMARY

A method, apparatus, device, and storage medium for matching semantics are provided.

In a first aspect, an embodiment of the present disclosure provides a method for matching semantics, the method including: acquiring a first text and a second text; acquiring language knowledge related to the first text and the second text; determining a target embedding vector based on the first text, the second text, and the language knowledge; and determining a semantic matching result of the first text and the second text, based on the target embedding vector.

In a second aspect, an embodiment of the present disclosure provides an apparatus for matching semantics, the apparatus including: a first acquisition unit, configured to acquire a first text and a second text; a second acquisition unit, configured to acquire language knowledge related to the first text and the second text; a vector determination unit, configured to determine a target embedding vector based on the first text, the second text, and the language knowledge; and a semantic matching unit, configured to determine a semantic matching result of the first text and the second text, based on the target embedding vector.

In a third aspect, an embodiment of the present disclosure provides an electronic device for matching semantics, the device electronic including: at least one processor; and a memory, communicatively connected with the at least one processor, the memory storing instructions executable by the at least one processor, the instructions, when executed by the at least one processor, causing the at least one processor to perform the method according to the first aspect.

In a fourth aspect, an embodiment of the present disclosure provides a non-transitory computer readable storage medium, storing computer instructions, the computer instructions being used to cause a computer to perform the method according to the first aspect.

The technology according to embodiments of the present disclosure may use external language knowledge to increase the amount of information in the text semantic matching process, so that the semantics of the text can be accurately described, and the accuracy of semantic matching can be improved.

It should be appreciated that the description of the Summary is not intended to limit the key or important features of embodiments of the present disclosure, or to limit the scope of the present disclosure. Other features of the present disclosure will become readily comprehensible through the following description.

### BRIEF DESCRIPTION OF THE DRAWINGS

The accompanying drawings are used to better understand the present solution and do not constitute a limitation to the present disclosure.
Fig. 1 is a diagram of an example system architecture in which an embodiment of the present disclosure may be implemented;
Fig. 2 is a flowchart of a method for matching semantics according to an embodiment of the present disclosure;
Fig. 3 is a schematic diagram of an application scenario of the method for matching semantics according to an embodiment of the present disclosure;
Fig. 4 is a flowchart of the method for matching semantics according to another embodiment of the present disclosure;
Fig. 5 is a schematic structural diagram of an apparatus for matching semantics according to an embodiment of the present disclosure; and
Fig. 6 is a block diagram of an electronic device for implementing the method for matching semantics according to embodiments of the present disclosure.

### DETAILED DESCRIPTION OF EMBODIMENTS

Example embodiments of the present disclosure are described below in combination with the accompanying drawings, and various details of embodiments of the present disclosure are included in the description to facilitate understanding, and should be considered as illustrative only. Accordingly, it should be recognized by one of the ordinary skilled in the art that various changes and modifications may be made to embodiments described herein without departing from the scope and spirit of the present disclosure. Also, for clarity and conciseness, descriptions for well-known functions and structures are omitted in the following description.

It should also be noted that some embodiments in the present disclosure and some features in the disclosure may be combined with each other on a non-conflict basis. Features of the present disclosure will be described below in detail with reference to the accompanying drawings and in combination with embodiments.

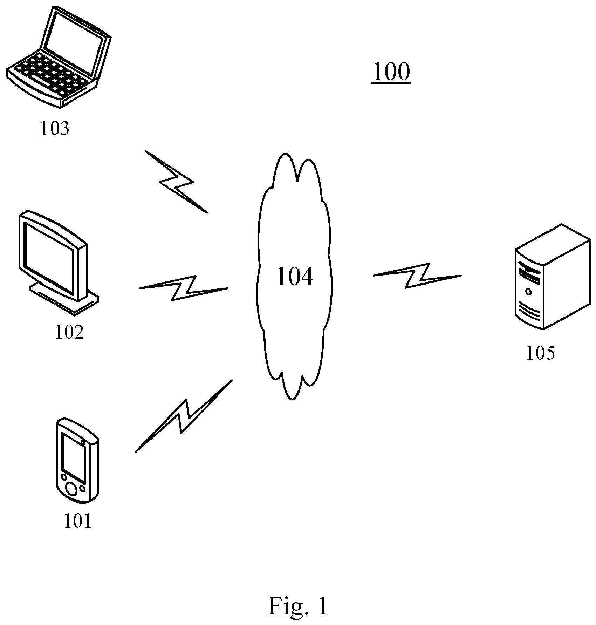

Fig. 1 illustrates an example system architecture 100 in which a method for matching semantics or an apparatus for matching semantics of embodiments of the present disclosure may be implemented.

As shown in Fig. 1, the system architecture 100 may include terminal devices 101, 102, 103, a network 104, and a server 105. The network 104 serves as a medium providing a communication link between the terminal devices 101, 102, 103 and the server 105. The network 104 may include various types of connections, such as wired or wireless communication links, or optic fibers.

A user may use the terminal devices 101, 102, 103 to interact with the server 105 through the network 104 to receive or send messages, etc. Various communication client applications, such as text input applications, or speech recognition applications, may be installed on the terminal devices 101, 102, 103.

The terminal devices 101, 102, 103 may be hardware or software. When the terminal devices 101, 102, 103 are hardware, the terminal devices 101, 102, 103 may be various electronic devices, including but not limited to smart phones, tablet computers, E-book readers, vehicle-mounted computers, laptop portable computers, desktop computers, and so on. When the terminal devices 101, 102, 103 are software, the terminal devices 101, 102, 103 may be installed in the electronic devices listed above. They may be implemented as a plurality of pieces of software or software modules (for example, for providing distributed services), or as a single piece of software or software module, which is not specifically limited herein.

The server 105 may be a server that provides various services, such as a backend server that performs semantic matching on text sent on the terminal devices 101, 102, 103. The backend server may process the received text, determine a semantic matching result, and feed back the semantic matching result to the terminal devices 101, 102, 103.

It should be noted that the server 105 may be hardware or software. When the server 105 is hardware, the server 105 may be implemented as a distributed server cluster composed of a plurality of servers, or as a single server. When the server 105 is software, the server 105 may be implemented as a plurality of pieces of software or software modules (for example, for providing distributed services) or as a single piece of software or software module, which is not specifically limited herein.

It should be noted that the method for matching semantics provided by embodiments of the present disclosure is generally performed by the server 105. Accordingly, the apparatus for matching semantics is generally provided in the server 105.

It should be understood that the numbers of terminal devices, networks and servers in Fig. 1 are merely illustrative. Depending on the implementation needs, there may be any number of terminal devices, networks and servers.

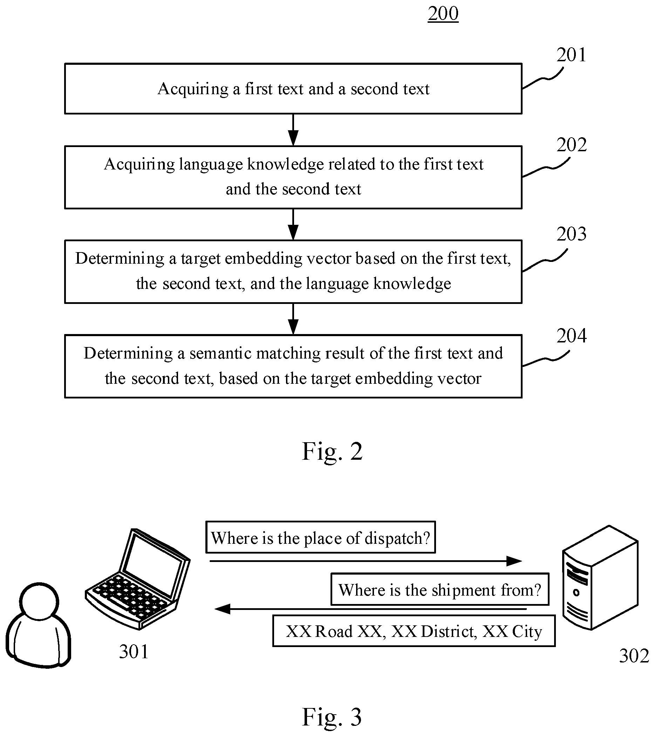

With further reference to Fig. 2, a flow 200 of a method for matching semantics according to an embodiment of the present disclosure is illustrated. The method for matching semantics of the present embodiment includes the following steps.

Step 201, acquiring a first text and a second text.

In the present embodiment, an executing body of the method for matching semantics (for example, the server 105 shown in Fig. 1) may first acquire the first text and the second text. Here, the first text and the second text are texts to be matched. For example, the first text may be "where is the shipment from", and the second text may be "where is the place of dispatch".

Step 202, acquiring language knowledge related to the first text and the second text.

After acquiring the first text and the second text, the executing body may acquire the language knowledge related to the first text and the second text. Specifically, the executing body may use all language knowledge in a knowledge base as related language knowledge. Alternatively, the executing body may search for documents or web pages including the first text and the second text, and use these documents or web pages as the related language knowledge.

In some alternative implementations of the present embodiment, the executing body may acquire the related language knowledge through the following steps not shown in Fig. 2: determining entity mentions in the first text and the second text; and determining the language knowledge based on a preset knowledge base and the entity mentions.

In this implementation, the executing body may first determine the entity mentions in the first text and the second text. For example, the executing body may perform word segmentation processing on a target text, and use obtained nouns as the entity mentions. Alternatively, the executing body may perform named entity recognition on the target text, and use obtained named entities as the entity mentions. Here, the entity mention refers to the textual representation of an entity, which may be a named entity, a common noun phrase, a pronoun, etc. For example, for the entity "Fudan University", the entity mentions of the entity may include "Fudan University", "Fudan", "Dan University" and so on.

Then, the executing body may determine the language knowledge based on the preset knowledge base and the entity mentions. The language knowledge here may include description texts of the entity mentions, corresponding candidate entities, candidate entities corresponding to the entity mentions, and so on.

Step 203, determining a target embedding vector based on the first text, the second text, and the language knowledge.

The executing body may determine the target embedding vector based on the first text, the second text, and the language knowledge. Specifically, the executing body may input the first text, the second text, and the language knowledge into a pre-trained embedding vector determination model to obtain the target embedding vector (embedding). The embedding vector determination model is used to represent a corresponding relationship between the first text, the second text and the language knowledge, and the target embedding vector. The embedding vector determination model may be a plurality of existing language models, for example, Bert (Bidirectional Encoder Representation from Transformers), Ernie (Ernie is built based on Baidu's deep learning framework paddlepaddle), and so on.

It may be understood that the target embedding vector contains semantic information of the first text and the second text.

Step 204, determining a semantic matching result of the first text and the second text, based on the target embedding vector.

After obtaining the target embedding vector, the executing body may determine a semantic matching relationship of the first text and the second text. Specifically, the executing body may input the target embedding vector into a pre-trained classification model, determine a classification result of the target embedding vector, and determine whether the first text matches the second text based on the classification result.

With further reference to Fig. 3, a schematic diagram of an application scenario of the method for matching semantics according to an embodiment of the present disclosure is illustrated. In the application scenario shown in Fig. 3, a user inputs the first text "where is the place of dispatch" using a terminal 301. After receiving the first text, a server 302 selects a plurality of second texts from a Q&A pair set, and then analyzes whether the first text matches each second text. After determining that the second text (where is the shipment from) matches the first text, the answer (XX Road XX, XX District, XX City) corresponding to the second text may be returned to the terminal 301.

The method for matching semantics provided by embodiments of the present disclosure, may use external language knowledge to increase the amount of information in the text semantic matching process, so that the semantics of the text can be accurately described, and the accuracy of semantic matching can be improved.

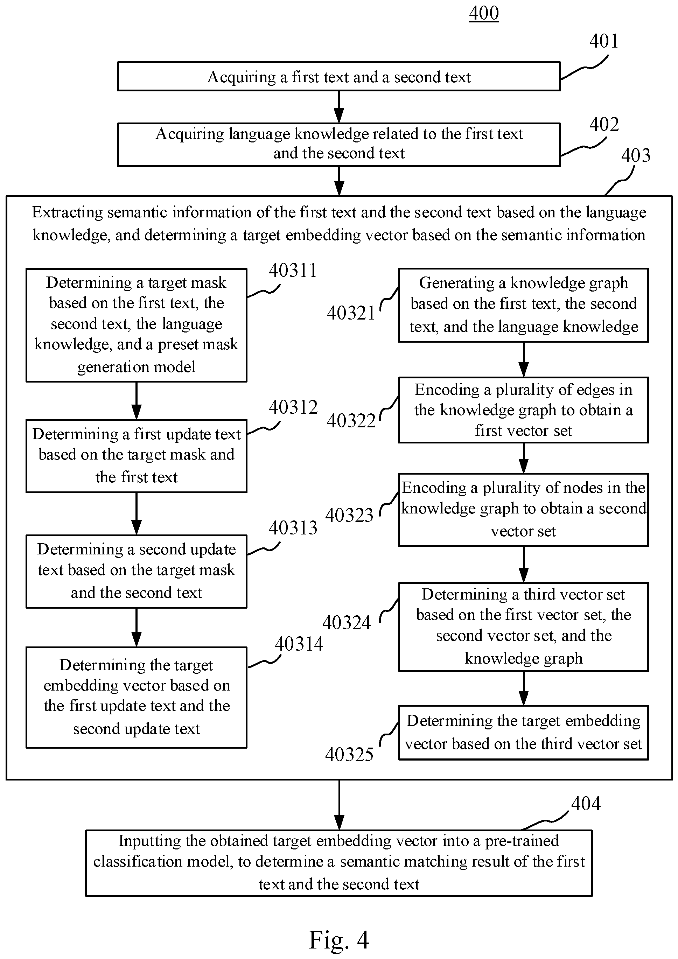

With further reference to Fig. 4, a flow 400 of the method for matching semantics according to another embodiment of the present disclosure is illustrated. In the present embodiment, the method for matching semantics may include the following steps.

Step 401, acquiring a first text and a second text.

Step 402, acquiring language knowledge related to the first text and the second text.

Step 403, extracting semantic information of the first text and the second text based on the language knowledge, and determining a target embedding vector based on the semantic information.

In the present embodiment, the semantic information of the first text and the second text may be extracted respectively based on the language knowledge. Here, the semantic information may include important information in the first text and the second text, and may also include associated information between the first text, the second text, and external language knowledge. Here, the important information may be understood as information other than stop words, punctuations, emojis, etc. Then, the executing body may determine the target embedding vector based on the semantic information. Specifically, the executing body may input the semantic information into various vector generation algorithms to obtain the target embedding vector. The vector generation algorithms may include language models, neural networks, and so on.

In some application scenarios, the semantic information may be extracted using masks, and the semantic information may also be extracted using a knowledge graph. Specifically, the executing body may determine the target embedding vector using a first implementation of steps 40311 to 40314, and may also determine the target embedding vector using a second implementation of steps 40321 to 40325.

The first implementation is as follows.

Step 40311, determining a target mask based on the first text, the second text, the language knowledge, and a preset mask generation model.

In the present embodiment, the executing body may input the first text, the second text, and the language knowledge into the preset mask generation model to obtain the target mask. The mask generation model may be obtained by pre-training based on training samples in a training sample set. The training samples may include two texts and the language knowledge, and may also include a labeled mask. During training, the two texts and the language knowledge of the training samples may be used as inputs, and a corresponding mask may be used as an output to obtain the mask generation model.

Here, the length of the mask may correspond to the length of the two texts, and the mask may include 1 and 0. For example, the mask may be 11111000111100. The mask indicates that the 1^{st} to 5^{th} and 9^{th} to 12^{th} digits are unoccluded text, and the 6^{th} to 8^{th} and 13^{th} to 14^{th} digits are occluded text. In the present embodiment, unimportant characters in the first text and the second text may be occluded by using the target mask. These unimportant characters may include stop words, punctuations, emojis, etc., so that the extracted embedding vector may express the first text and the second text more accurately.

Step 40312, determining a first update text based on the target mask and the first text.

After obtaining the target mask, the first update text may be determined based on the target mask and the first text. It may be understood that some characters are occluded in the first update text.

Step 40313, determining a second update text based on the target mask and the second text.

Similarly, the executing body may also determine the second update text based on the target mask and the second text.

Step 40314, determining the target embedding vector based on the first update text and the second update text.

After obtaining the first update text and the second update text, the executing body may splice the first update text and the second update text, and then input the spliced text into a language model to obtain the target embedding vector. It may be understood that the spliced text may include a mark for distinguishing the first update text from the second update text.

Using the first implementation, the executing body may learn important vocabulary in the first text and the second text combining the language knowledge, so that the embedding vector can more accurately express the meaning of the first text and the second text.

The second implementation is as follows.

Step 40321, generating a knowledge graph based on the first text, the second text, and the language knowledge.

After obtaining the first text, the second text and the language knowledge, the executing body may generate the knowledge graph. Specifically, the executing body may first perform word segmentation on the first text and the second text to obtain a plurality of vocabularies. Then, for each vocabulary, the executing body may construct a subgraph centered on the vocabulary based on knowledge involved in the vocabulary. The vocabulary may also be called the central vocabulary of each subgraph. After each subgraph is constructed, the subgraphs are spliced. When splicing, the subgraphs need to be spliced according to the relationship between the central vocabularies. The spliced graph may be constructed as the knowledge graph. It may be understood that the knowledge graph contains all the knowledge in the first text, the second text and the language knowledge.

Step 40322, encoding a plurality of edges in the knowledge graph to obtain a first vector set.

After constructing the knowledge graph, the executing body may encode the plurality of edges in the knowledge graph to obtain the first vector set. When encoding, any encoding algorithm may be used. Here, each vector in the first vector set corresponds to an edge.

Step 40323, encoding a plurality of nodes in the knowledge graph to obtain a second vector set.

Similarly, the executing body may also encode the plurality of nodes in the knowledge graph to obtain the second vector set. Each vector in the second vector set corresponds to a node.

Step 40324, determining a third vector set based on the first vector set, the second vector set, and the knowledge graph.

According to the relationship between nodes and edges in the knowledge graph, the executing body may splice the vectors in the first vector set with corresponding vectors in the second vector set to obtain the third vector set. Each vector in the third vector set corresponds to the subgraph generated when constructing the knowledge graph. When splicing, the executing body may insert a separation mark between two vectors to distinguish the two spliced vectors.

Step 40325, determining the target embedding vector based on the third vector set.

The executing body may splice the vectors in the third vector set to obtain the target embedding vector. When splicing, the vectors in the third vector set may be inputted to a fully connected layer to obtain the target embedding vector.

For the target embedding vector determined using the present implementation, because the knowledge graph contains all the information of the first text, the second text and the language knowledge, the embedding vector contains richer information about the first text and the second text.

Step 404, inputting the obtained target embedding vector into a pre-trained classification model, to determine a semantic matching result of the first text and the second text.

The executing body may obtain the target embedding vector using the first implementation, or may obtain the target embedding vector using the second implementation, or may obtain the target embedding vector using the two implementations. After the target embedding vector is obtained using a single implementation, the target embedding vector may be inputted into the pre-trained classification model to determine the semantic matching result of the first text and the second text. After the target embedding vector is obtained using the two implementations, two embedding vectors may be first spliced or weighted to obtain an embedding vector. Then, the embedding vector is inputted into the pre-trained classification model to determine the semantic matching result of the first text and the second text.

The classification model may be a binary classification model. Here, the problem of matching between the first text and the second text may essentially be regarded as a classification problem. If the two texts match, the two texts may be classified into category 1. If the two texts do not match, the two texts may be classified into category 0. The classification model may be trained in advance using a plurality of matched text pairs and a plurality of unmatched text pairs.

In some alternative implementations of the present embodiment, if the executing body obtains at least two target embedding vectors through at least two methods, the semantic matching result may be determined through the following steps: splicing the obtained target embedding vectors to obtain a spliced vector; and inputting the spliced vector into the classification model, to determine the semantic matching result of the first text and the second text.

In the present embodiment, the executing body may splice the obtained at least two target embedding vectors to obtain the spliced vector. When splicing, the target embedding vectors may be directly spliced, and the target embedding vectors may be distinguished by a preset mark. Alternatively, the executing body may also first intercept the target embedding vectors, so that the length of each target embedding vector is the same, and then the target embedding vectors are spliced in a preset order. Then, the executing body may input the spliced vector into the classification model to determine the semantic matching result of the first text and the second text.

The method for matching semantics provided by embodiments of the present disclosure, may obtain the embedding vectors of the first text and the second text using two methods. Since the obtained embedding vectors have learned the external language knowledge, the obtained embedding vectors can accurately describe the meaning of the first text and the second text, thereby improving the accuracy of semantic matching.

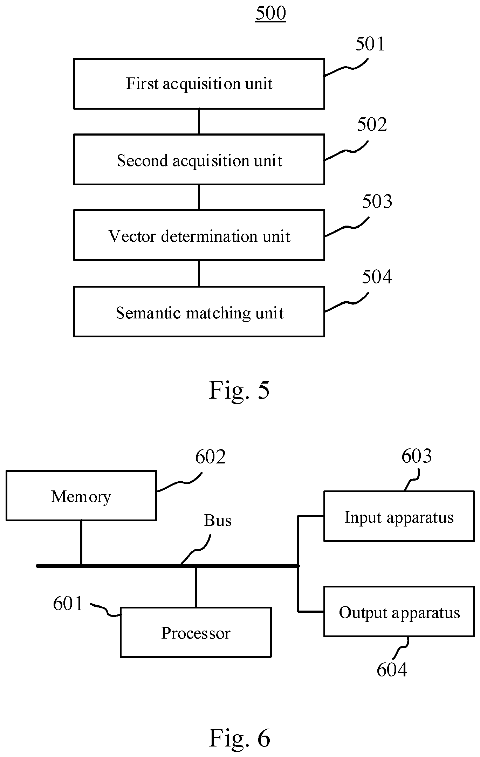

With further reference to Fig. 5, as an implementation of the method shown in the above figures, an embodiment of the present disclosure provides an apparatus for matching semantics, and the apparatus embodiment corresponds to the method embodiment as shown in Fig. 2. The apparatus may be specifically applied to various electronic devices.

As shown in Fig. 5, an apparatus 500 for matching semantics of the present embodiment includes: a first acquisition unit 501, a second acquisition unit 502, a vector determination unit 503 and a semantic matching unit 504.

The first acquisition unit 501 is configured to acquire a first text and a second text.

The second acquisition unit 502 is configured to acquire language knowledge related to the first text and the second text.

The vector determination unit 503 is configured to determine a target embedding vector based on the first text, the second text, and the language knowledge.

The semantic matching unit 504 is configured to determine a semantic matching result of the first text and the second text, based on the target embedding vector.

In some alternative implementations of the present embodiment, the vector determination unit 503 may be further configured to: extract semantic information of the first text and the second text based on the language knowledge, and determine the target embedding vector based on the semantic information.

In some alternative implementations of the present embodiment, the vector determination unit 503 may be further configured to: determine a target mask based on the first text, the second text, the language knowledge, and a preset mask generation model; determine a first update text based on the target mask and the first text; determine a second update text based on the target mask and the second text; and determine the target embedding vector based on the first update text and the second update text.

In some alternative implementations of the present embodiment, the vector determination unit 503 may be further configured to: generate a knowledge graph based on the first text, the second text, and the language knowledge; encode a plurality of edges in the knowledge graph to obtain a first vector set; encode a plurality of nodes in the knowledge graph to obtain a second vector set; determine a third vector set based on the first vector set, the second vector set, and the knowledge graph; and determine the target embedding vector based on the third vector set.

In some alternative implementations of the present embodiment, the semantic matching unit 504 may be further configured to: input the obtained target embedding vector into a pre-trained classification model, to determine the semantic matching result of the first text and the second text.

In some alternative implementations of the present embodiment, the semantic matching unit 504 may be further configured to: splice obtained target embedding vectors to obtain a spliced vector, in response to obtaining at least two target embedding vectors through at least two methods; and input the spliced vector into the classification model, to determine the semantic matching result of the first text and the second text.

In some alternative implementations of the present embodiment, the second acquisition unit 502 may be further configured to: determine entity mentions in the first text and the second text; and determine the language knowledge based on a preset knowledge base and the entity mentions.

It should be understood that the units 501 to 504 recorded in the apparatus 500 for matching semantics correspond to the steps in the method described with reference to Fig. 2 respectively. Therefore, the operations and features described above for the method for matching semantics are also applicable to the apparatus 500 and the units contained therein, and detailed description thereof will be omitted.

According to an embodiment of the present disclosure, the present disclosure further provides an electronic device and a readable storage medium.

As shown in Fig. 6, a block diagram of an electronic device of the method for matching semantics according to an embodiment of the present disclosure is illustrated. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 6, the electronic device includes: one or more processors 601, a memory 602, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories and a plurality of memories if desired. Similarly, a plurality of electronic devices may be connected, and the devices provide some necessary operations, for example, as a server array, a set of blade servers, or a multi-processor system. In Fig. 6, one processor 601 is used as an example.

The memory 602 is a non-transitory computer readable storage medium provided by embodiments of the present disclosure. The memory stores instructions executable by at least one processor, so that the at least one processor performs the method for matching semantics provided by embodiments of the present disclosure. The non-transitory computer readable storage medium of embodiments of the present disclosure stores computer instructions for causing a computer to perform the method for matching semantics provided by embodiments of the present disclosure.

The memory 602, as a non-transitory computer readable storage medium, may be used to store non-transitory software programs, non-transitory computer executable programs and modules, such as program instructions/modules corresponding to the method for matching semantics in embodiments of the present disclosure (for example, the first acquisition unit 501, the second acquisition unit 502, the vector determination unit 503 and the semantic matching unit 504 as shown in Fig. 5). The processor 601 executes the non-transitory software programs, instructions, and modules stored in the memory 602 to execute various functional applications and data processing of the server, that is, to implement the method for matching semantics in the foregoing method embodiments.

The memory 602 may include a storage program area and a storage data area, where the storage program area may store an operating system and at least one function required application program; and the storage data area may store data created by the use of the electronic device for matching semantics. In addition, the memory 602 may include a high-speed random access memory, and may also include a non-transitory memory, such as at least one magnetic disk storage device, a flash memory device, or other non-transitory solid-state storage devices. In some embodiments, the memory 602 may optionally include memories remotely provided with respect to the processor 601, and these remote memories may be connected to the electronic device for matching semantics through a network. Examples of the above network include but are not limited to the Internet, intranet, local area network, mobile communication network, and combinations thereof.

The electronic device performing the method for matching semantics may further include: an input apparatus 603 and an output apparatus 604. The processor 601, the memory 602, the input apparatus 603, and the output apparatus 604 may be connected through a bus or in other methods. In Fig. 6, connection through the bus is used as an example.

The input apparatus 603 may receive input digital or character information, and generate key signal inputs related to user settings and function control of the electronic device for matching semantics, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various implementations of the systems and techniques described herein may be implemented in a digital electronic circuit system, an integrated circuit system, an application specific integrated circuit (ASIC), computer hardware, firmware, software, and/or combinations thereof. These various implementations may include the implementation in one or more computer programs. The one or more computer programs may be executed and/or interpreted on a programmable system including at least one programmable processor, and the programmable processor may be a dedicated or general-purpose programmable processor, may receive data and instructions from a storage system, at least one input apparatus and at least one output apparatus, and transmit the data and the instructions to the storage system, the at least one input apparatus and the at least one output apparatus.

These computing programs, also referred to as programs, software, software applications or codes, include a machine instruction of the programmable processor, and may be implemented using a high-level procedural and/or an object-oriented programming language, and/or an assembly/machine language. As used herein, the terms "machine readable medium" and "computer readable medium" refer to any computer program product, device and/or apparatus (e.g., a magnetic disk, an optical disk, a storage device and a programmable logic device (PLD)) used to provide a machine instruction and/or data to the programmable processor, and include a machine readable medium that receives the machine instruction as a machine readable signal. The term "machine readable signal" refers to any signal used to provide the machine instruction and/or data to the programmable processor.

To provide an interaction with a user, the systems and techniques described here may be implemented on a computer having a display apparatus (e.g., a cathode ray tube (CRT)) or an LCD monitor) for displaying information to the user, and a keyboard and a pointing apparatus (e.g., a mouse or a track ball) by which the user may provide the input to the computer. Other kinds of apparatuses may also be used to provide the interaction with the user. For example, a feedback provided to the user may be any form of sensory feedback (e.g., a visual feedback, an auditory feedback, or a tactile feedback); and an input from the user may be received in any form, including acoustic, speech, or tactile input.

The systems and techniques described here may be implemented in a computing system (e.g., as a data server) that includes a backend part, implemented in a computing system (e.g., an application server) that includes a middleware part, implemented in a computing system (e.g., a user computer having a graphical user interface or a Web browser through which the user may interact with an implementation of the systems and techniques described here) that includes a frontend part, or implemented in a computing system that includes any combination of the backend part, the middleware part or the frontend part. The parts of the system may be interconnected by any form or medium of digital data communication (e.g., a communication network). Examples of the communication network include a local area network (LAN), a wide area network (WAN) and the block chain network.

The computer system may include a client and a server. The client and the server are generally remote from each other and typically interact through the communication network. The relationship between the client and the server is generated through computer programs running on the respective computer and having a client-server relationship to each other.

According to the technical solution of the present disclosure, external language knowledge may be used to increase the amount of information in the text semantic matching process, so that the semantics of the text can be accurately described, and the accuracy of semantic matching can be improved.

It should be understood that the various forms of processes shown above may be used to resort, add or delete steps. For example, the steps described in the present disclosure may be performed in parallel, sequentially, or in a different order. As long as the desired result of the technical solution disclosed in the present disclosure can be achieved, no limitation is made herein.

Embodiments do not constitute a limitation to the scope of protection of the present disclosure. It should be appreciated by those skilled in the art that various modifications, combinations, sub-combinations and substitutions may be made depending on design requirements and other factors. Any modifications, equivalents and replacements, and improvements falling within the spirit and the principle of the present disclosure should be included within the scope of protection of the present disclosure.

## Claims

1. A method for matching semantics, the method comprising:
acquiring (201, 401) a first text and a second text;
acquiring (202, 402) language knowledge related to the first text and the second text;
determining (203) a target embedding vector based on the first text, the second text, and the language knowledge; and
determining (204) a semantic matching result of the first text and the second text, based on the target embedding vector.

2. The method according to claim 1, wherein the determining (203) the target embedding vector based on the first text, the second text, and the language knowledge, comprises:
extracting (403) semantic information of the first text and the second text based on the language knowledge, and determining the target embedding vector based on the semantic information.

3. The method according to claim 2, wherein the extracting (403) semantic information of the first text and the second text based on the language knowledge, and determining the target embedding vector based on the semantic information, comprises:
determining (40311) a target mask based on the first text, the second text, the language knowledge, and a preset mask generation model;
determining (40312) a first update text based on the target mask and the first text;
determining (40313) a second update text based on the target mask and the second text; and
determining (40314) the target embedding vector based on the first update text and the second update text.

4. The method according to claim 2, wherein the extracting (403) semantic information of the first text and the second text based on the language knowledge, and determining the target embedding vector based on the semantic information, comprises:
generating (40321) a knowledge graph based on the first text, the second text, and the language knowledge;
encoding (40322) a plurality of edges in the knowledge graph to obtain a first vector set;
encoding (40323) a plurality of nodes in the knowledge graph to obtain a second vector set;
determining (40324) a third vector set based on the first vector set, the second vector set, and the knowledge graph; and
determining (40325) the target embedding vector based on the third vector set.

5. The method according to any one of claims 1-4, wherein the determining (204) the semantic matching result of the first text and the second text, based on the target embedding vector, comprises:
inputting the obtained target embedding vector into a pre-trained classification model, to determine the semantic matching result of the first text and the second text.

6. The method according to any one of claims 1-4, wherein the determining (204) the semantic matching result of the first text and the second text, based on the target embedding vector, comprises:
splicing obtained target embedding vectors to obtain a spliced vector, in response to obtaining at least two target embedding vectors through at least two methods; and
inputting the spliced vector into a classification model, to determine the semantic matching result of the first text and the second text.

7. The method according to any one of claims 1-6, wherein the acquiring (202, 402) language knowledge related to the first text and the second text, comprises:
determining entity mentions in the first text and the second text; and
determining the language knowledge based on a preset knowledge base and the entity mentions.

8. An apparatus for matching semantics, the apparatus comprising a plurality of modules (501, 502, 503, 504) configured to implement the method according to any one of claims 1-7.

9. An electronic device for matching semantics, comprising:
at least one processor (601); and
a memory (602), communicatively connected with the at least one processor;
the memory (602) storing instructions executable by the at least one processor (601), the instructions, when executed by the at least one processor (601), causing the at least one processor (601)to perform the method according to any one of claims 1-7.

10. A non-transitory computer readable storage medium, storing computer instructions, the computer instructions being used to cause a computer to perform the method according to any one of claims 1-7.
